# EUROPEAN PATENT APPLICATION

(11) **EP 4 624 147 A1**
(43) Date of publication of application: **01.10.2025**
(21) Application number: 23894991.1
(22) Date of filing: 21.11.2023
(51) Int. Cl.: B32B 7/028, B32B 27/08, B32B 27/30, B32B 27/32, B32B 27/18

(54) **FILM FOR SHRINKABLE LABEL HAVING EXCELLENT SHRINKABILITY AND STIFFNESS**

(30) Priority: 21.11.2022 KR 20220156659
(71) Applicant: Lotte Chemical Corporation, Seoul 05551 (KR)
(72) Inventor: OH, Sun Hyung, Daejeon 34110 (KR); KIM, Song Ho, Daejeon 34110 (KR); MOON, Yun A, Daejeon 34110 (KR)
(74) Representative: Germain Maureau
(86) International application number: PCT/KR2023/018761
(87) International publication number: WO 2024/112063

(57) **Abstract**

In a film for a shrinkable label, disclosed is a film for a shrinkable label having improved low-temperature shrinkability and stiffness while maintaining improved seaming properties and transparency as a non-adhesive label having a specific gravity of less than 1. The present invention provides a film for a shrinkable label, the film including a skin layer, a core layer, and a seal layer, wherein the skin layer and the seal layer include a first polystyrene-based resin, and the core layer includes: 40 parts by weight to 90 parts by weight of a copolymer of propylene and two or more types olefins selected from ethylene and α-olefin; 5 parts by weight to 30 parts by weight of a petroleum resin having a softening point of 120 °C to 140 °C; and 5 parts by weight to 30 parts by weight of a polyolefin elastomer, wherein a tie layer including a second polystyrene-based resin is provided between the skin layer and the core layer, and between the core layer and the seal layer.

## Description

### TECHNICAL FIELD

The present invention relates to a film for a shrinkable label, and more specifically, to a film for a shrinkable label with excellent shrinkability and stiffness.

This application claims the benefit of Korean Patent Application No. 10-2022-0156659, filed on November 21, 2022, in the Korean Intellectual Property Office, the disclosure of which is incorporated herein in its entirety by reference.

### BACKGROUND ART

In general, a label having a printed layer formed on the outer surface thereof is attached to various plastic containers such as PET bottles. Types of such a label include an adhesive label and a non-adhesive label, which are distinguished according to whether or not an adhesive is used between the container and the label.

The adhesive label is commonly manufactured using a polypropylene material, and the non-adhesive label is mainly manufactured using polystyrene, polyester, polyvinyl chloride, or the like. Containers made of polyethylene terephthalate (PET), polystyrene (PS), or the like and having labels attached thereto are pulverized and pelletized after use, and then recycled into containers through a recycling process. At this time, the recycling process is classified by the difference in specific gravity obtained by putting pelletized containers into water.

Meanwhile, the Ministry of Environment enforced the standards for recyclability ease rating for packaging materials (Ministry of Environment Notice No. 2019-255, enforced on December 30, 2019), and according to the standards, non-adhesive labels having a specific gravity of less than 1 are classified as having the best recyclability ease rating, and therefore, there is a demand for the development of non-adhesive labels having a specific gravity of less than 1.

In consideration of the physical properties of a non-adhesive label, it is possible to use a polyolefin material having a specific gravity of less than 1 in the case of typical PS, PET, polyvinyl chloride (PVC), and the like due to a large specific gravity thereof, but it is difficult to impart shrinkability and seaming properties to a film made of the polyolefin material, so that a cyclic olefin copolymer (COC) resin is added when molding a film.

For a label, Gravure printing is performed on a produced film, at which time, if the tensile strength in a longitudinal direction (MD) of the film is low, the tension applied to a roll is low, resulting in degrading productivity during printing. In addition, if the film haze is high during the printing, the marketability of a printed product is poor in terms of appearance clarity and aesthetics.

Meanwhile, as a beverage filling line, an aseptic line, which is a low-temperature sterilization system, is mainly used, and a labeling process of the aseptic line is performed by using steam as a heat-shrinkage heat source, so that the higher the shrinkage rate at a low temperature (100 °C), the more diverse the types of beverages (bottles) which may be applied, and a material with improved low-temperature shrinkability is required to be able to increase a stretching magnification at a low-temperature stretching temperature (82 to 85 °C).

Korean Patent Publication No. 10-2008-0074177 discloses a multi-layer oriented shrinkable film which includes one or more skin layers including a polystyrene material and one or more core layers including a polyolefin layer, but the strength and loop stiffness of a final film are low, and the low-temperature (100 °C) shrinkability is poor due to stretching at high temperatures (110 °C to 130 °C).

Japanese Patent No. 6268136 discloses a heat-shrinkable multi-layer film composed of front and back layers including a cyclic olefin-based resin and an ethylene-based resin, and a middle layer including an olefin-based resin and a plastic resin, but there is a problem in that the film has a high haze, and has a limited stretching magnification, thereby causing breakage when the stretching magnification is 5 times or greater.

### DISCLOSURE OF THE INVENTION

### TECHNICAL PROBLEM

An aspect of the present invention provides a film for a shrinkable label, wherein the film for a shrinkable label has improved low-temperature shrinkability and stiffness while maintaining improved seaming properties and transparency as a non-adhesive label having a specific gravity of less than 1.

### TECHNICAL SOLUTION

According to an aspect of the present invention, there is provided a film for a shrinkable label, the film including a skin layer, a core layer, and a seal layer, wherein the skin layer and the seal layer include a first polystyrene-based resin, and the core layer includes: 40 parts by weight to 90 parts by weight of a copolymer of propylene and two or more types of olefins selected from ethylene and α-olefin; 5 parts by weight to 30 parts by weight of a petroleum resin having a softening point of 120 °C to 140 °C; and 5 parts by weight to 30 parts by weight of a polyolefin elastomer, wherein a tie layer including a second polystyrene-based resin is provided between the skin layer and the core layer, and between the core layer and the seal layer.

In addition, the film for a shrinkable label is characterized in that the first polystyrene-based resin is one or more selected from the group consisting of general purpose polystyrene (GPPS), high-impact polystyrene (HIPS), styrene-butadiene-styrene copolymer (SBS), styrene-isoprene-styrene copolymer (SIS), styrene-ethylene-butylene-styrene copolymer (SEBS), and styrene-butadiene copolymer (SBC).

In addition, the film for a shrinkable label is characterized in that the copolymer has a melting point (Tm) of 123 °C to 138 °C and a melt index (230 °C, 2.16 kg load) of 2 g/10 min to 10 g/10 min, and the two olefins are ethylene and 1-butene.

In addition, the film for a shrinkable label is characterized in that the ethylene and the 1-butene are each contained in 1 wt% to 5 wt% in the copolymer.

In addition, the film for a shrinkable label is characterized in that the polyolefin elastomer is propylene-ethylene rubber (PER) or propylene-butene rubber (PBR) having a density of 0.85 g/cm³ to 0.9 g/cm³ and a melt index (230 °C, 2.16 kg load) of 0.5 g/10min to 10 g/10 min.

In addition, the film for a shrinkable label is characterized in that the second polystyrene-based resin is one or more selected from the group consisting of styrene-ethylene-butylene-styrene copolymer (SEBS), styrene-ethylene-propylene-styrene copolymer (SEPS), styrene-butadiene-styrene copolymer (SBS), styrene-isoprene-styrene copolymer (SIS), and styrene-butadiene copolymer (SBC).

In addition, the film for a shrinkable label is characterized in that the film has a density of less than 1 g/cm³, a shrinkage rate of 50% or greater, and a loop stiffness of 6 gf/50 µm or greater, as measured according to the following methods.

### [Method for measuring shrinkage rate]

A film stretched in a transverse direction (TD) is cut to a size of 50 mm × 50 mm and immersed in a hot water bath at 100 °C for 10 seconds each, followed by measuring the dimensions thereof to calculate a shrinkage rate in the transverse direction (TD) according to Equation 1 below, which is represented as an average shrinkage rate. Shrinkage rate (%) = (Dimensions before shrinkage - Dimensions after shrinkage) / Dimensions before shrinkage x 100

### [Method for measuring stiffness]

Using a loop stiffness tester (Toyoseiki Co., Ltd.), a stretched film is cut to a size of 25 mm × 150 mm and fixed to left and right clamps (film fixing device) of the tester by setting a gap between the left and right clamps to 50 mm, and then portions of the film protruding to the outside of both clamps are cut, and the film is bent until there is no gap between the clamps so as to form a loop-shaped specimen, and an ending portion of the specimen is pushed at a rate of 60 mm/min using a loading device to measure a load (gf) applied at the time of the pushing.

In addition, the film for a shrinkable label is characterized in that the film has a haze (ASTM D1003, thickness of 50 µm) of less than 5%.

### ADVANTAGEOUS EFFECTS

According to the present invention, in a film for a shrinkable label, the film including a skin layer, a core layer, and a seal layer, the skin layer and the seal layer use a first polystyrene-based resin, and the core layer is composed of a copolymer of propylene and two or more types of olefins selected from ethylene and α-olefin, a petroleum resin, and a polyolefin elastomer, so that it is possible to provide a film for a shrinkable label having improved low-temperature shrinkability and stiffness while maintaining improved seaming properties and transparency as a non-adhesive label having a specific gravity of less than 1.

### BRIEF DESCRIPTION OF THE DRAWINGS

FIG. 1 is a schematic diagram for describing a labeling process (shooting and shrinkage) and a sleeve manufacturing process using a shrinkable label film.
FIG. 2 is a photograph showing the result of performing a scanning electron microscope (SEM) cross-sectional imaging on a film manufactured according to Example 1 of the present invention.
FIG. 3 is a view for explaining a site for confirming the presence or absence of adhesion of a film in a test example of the present invention.

### BEST MODE FOR CARRYING OUT THE INVENTION

Hereinafter, the present invention will be described in detail with reference to preferred embodiments. Prior to this, it will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention. Therefore, the configurations of the embodiments described herein are merely the most preferred embodiments of the present invention, and are not intended to limit the technical idea of the present invention. Therefore, it should be understood that there may be various equivalents and modifications that may substitute the embodiments at the time of filing the present application.

The present invention discloses a film for a shrinkable label, the film including a skin layer, a core layer, and a seal layer, wherein the skin layer and the seal layer include a first polystyrene-based resin, and the core layer includes 40 parts by weight to 90 parts by weight of a copolymer of propylene and two or more types of olefins selected from ethylene and α-olefin, 5 parts by weight to 30 parts by weight of a petroleum resin having a softening point of 120 °C to 140 °C, and 5 parts by weight to 30 parts by weight of a polyolefin elastomer.

The present invention provides a film for a shrinkable label having improved low-temperature shrinkability and stiffness while maintaining improved seaming properties and transparency as a non-adhesive label having a specific gravity of less than 1.

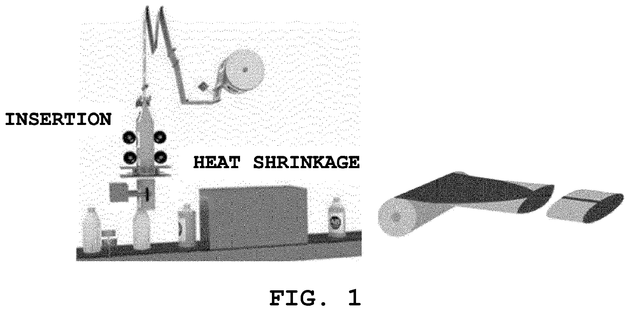

FIG. 1 is a schematic diagram for describing a labeling process (shooting and shrinkage) and a sleeve manufacturing process using a shrinkable label film. As shown in FIG. 1, the seaming properties are essential physical properties for adhesion between films when manufacturing a sleeve, the stiffness is stiffness (loop stiffness) of a predetermined value (about 4.5 gf) or greater, which is required for a film to have in order to facilitate a process (shooting process) of inserting a label into a bottle, the transparency affects the appearance of a film when the film is printed, and the shrinkability (TD direction) is physical properties required to adhere a film to a bottle container when the film passes through a heat shrink tunnel after label shooting.

In the present invention, the first polystyrene-based resin used in each of the skin layer and the seal layer may basically provide shrinkability and seaming properties of a material, and in terms of implementing improved low-temperature shrinkability and stiffness in a bonding relationship with a core layer and a tie layer of a specific composition to be described later while considering the stretching properties and transparency, general purpose polystyrene (GPPS), high-impact polystyrene (HIPS), styrene-butadiene-styrene copolymer (SBS), styrene-isoprene-styrene copolymer (SIS), styrene-ethylene-butylene-styrene copolymer (SEBS), styrene-butadiene copolymer (SBC), or the like may preferably be used, and more preferably, a resin in which styrene-butadiene copolymer (SBC) or styrene-butadiene copolymer (SBC) is mixed with general purpose polystyrene (GPPS) may be used.

Here, a cyclic olefin copolymer (COC) typically used as a skin layer and a seal layer has a limited stretching magnification, so that breakage occurs when the stretching magnification is 5 times or greater. In order to solve the above-described problem while reducing the specific gravity of a film, a method of adding a linear low-density polyethylene (LLDPE) may be considered, but the method degrades the stiffness of the film, and increases the haze thereof. The present invention excludes such a linear low-density polyethylene, and allows the specific gravity of a film to satisfy less than 1 though a change in the composition of a core layer to be described later. That is, a typical film for a shrinkable label exhibits a haze of 10% or greater if a skin layer and a seal layer contain a linear low-density polyethylene, but may have improved transparency with a haze of about 3% or less by excluding the linear low-density polyethylene.

In the present invention, in terms of lowering the specific gravity of a film, and at the same time, maintaining the excellent stiffness, transparency, and seaming properties of the film, to the extent that improved physical properties due to the use of the first polystyrene-based resin in the skin layer and the seal layer are not degraded, particularly in terms of improving low-temperature (100 °C) shrinkability of the film, it has been confirmed that it is most suitable that the core layer includes a copolymer of propylene and two or more types of olefins selected from ethylene and α-olefin, a petroleum resin, and a polyolefin elastomer.

The copolymer may preferably be an ethylene-propylene-α-olefin terpolymer, wherein the α-olefin has 4 to 10 carbon atoms, and may be, for example, 1-butene, 1-pentene, 1-hexene, 4-methyl-1-pentene, 1-heptene, 1-octene, 1-nonene, 1-decene, or the like, preferably 1-butene. In the case of the ethylene-propylene-α-olefin terpolymer, the content of the ethylene and the α-olefin may each be 1 wt% to 5 wt%.

In addition, the copolymer may have a melting point (Tm) of 123 °C to 138 °C and a melt index (230 °C, 2.16 kg load) of 2 g/10min to 10 g/10min, and more preferably, may have a melting point (Tm) of 126 °C to 135 °C and a melt index (230 °C, 2.16 kg load) of 4 g/10 min to 8 g/10 min.

In the present invention, the petroleum resin constituting the core layer is a modifier which is mixed to improve transparency and improving stiffness of a film, as well as to improve low-temperature shrinkability of the film. Here, there have been cases in which only an elastomer or plastomer is typically used as a core layer component, but in this case, the strength and stiffness of a final film are degraded due to a low density, and due to stretching at high temperatures (110 to 130°C), it is not possible to achieve a high shrinkage rate of 50% or greater, preferably 60% or greater, at low temperature (100 °C). Therefore, in the present invention, a petroleum resin having a specific softening point is added to a core layer to reduce the degree of crystallinity of raw materials of the core layer, thereby improving the stretching and film shrinkability at low temperatures, and the petroleum resin is located in an amorphous domain of the copolymer to reduce the size of crystallites of the copolymer, thereby improving optical properties.

The petroleum resin is a pale yellow or dark brown thermoplastic resin having a weight average molecular weight of 2,000 g/mol or less obtained by polymerization with an acid catalyst using a higher unsaturated hydrocarbons in a high-temperature pyrolysis oil such as naphtha as a raw material, and in the present invention, a petroleum resin having a softening point of 120 °C to 140 °C, preferably 130 °C to 140 °C, may be used in terms of improving low-temperature shrinkability and stiffness.

In the case of an aromatic petroleum resin as the petroleum resin, the main component may be a copolymer of styrenevinyltoluene, α-methylstyrene, or indene, and in the case of an aliphatic petroleum resin, the aliphatic petroleum resin is a resin prepared by using, as a raw material, a C5 fraction among fractions produced in an olefin process during a naphtha cracking process, wherein the main component may be a copolymer of isoprene, piperiene-2-methylbutene-1, or the like. In addition, the aliphatic petroleum resin may include a petroleum resin prepared by using dicyclopentadiene as a raw material. In addition, in the case of a hydrogenated petroleum resin, the hydrogenated petroleum resin may be a resin formed by adding hydrogen to the aromatic petroleum resin and the aliphatic petroleum resin, and may include a petroleum resin which is prepared by using dicyclopendadiene as a raw material and to which hydrogen is added.

In the present invention, the core layer includes a polyolefin elastomer (POE) to improve dispersion and flowability by increasing compatibility between components, and in particular, to increase a transverse (TD) elongation. That is, if the transverse (TD) elongation of a shrink film is low, when the shrink film is applied to product labels of such as carbonated beverages, the labels may burst, and in the present invention, through the mixing of a polyolefin elastomer in the core layer, the transverse (TD) elongation may be improved by about 50% or greater compared to the prior art.

In consideration of the above purpose, the polyolefin elastomer may have a density of 0.85 g/cm³ to 0.9 g/cm³ and a melt index (230 °C, 2.16 kg load) of 0.5 g/10 min to 10 g/10 min, preferably a density of 0.86 g/cm³ to 0.89 g/cm³ and a melt index (230 °C, 2.16 kg load) of 2 g/10 min to 8 g/10 min.

The polyolefin elastomer may be a copolymer of propylene and an olefin selected from ethylene or α-olefin. In this case, propylene-ethylene rubber (PER) or propylene-butene rubber (PBR), which has a lower melting point and higher compatibility than a propylene copolymer, which is the base resin of the core layer, may be used to lower a stretchable temperature (improve low-temperature stretchability), and improve a stretching ratio. In this regard, the polyolefin elastomer may preferably be propylene-ethylene rubber in which propylene and 5 wt% to 20 wt% of ethylene are copolymerized, or propylene-butene rubber in which propylene and 10 wt% to 30 wt% of butene are copolymerized, and more preferably, propylene-butene rubber in which propylene and 20 wt% to 30 wt% of butene are copolymerized.

In the present invention, it is possible to implement improvement in stiffness and low-temperature shrinkability along with maintaining desired improved seaming properties and transparency for a film for a shrinkable label through a component content ratio within a predetermined range in each layer of the above-described component combination. To this end, in the core layer, the copolymer is included in the content range of 40 parts by weight to 90 parts by weight, the petroleum resin is included in the content range of 5 parts by weight to 30 parts by weight, and the polyolefin elastomer is included in the content range of 5 parts by weight to 30 parts by weight. Preferably, the terpolymer may be included in the content range of 50 parts by weight to 80 parts by weight, the petroleum resin may be included in the content range of 5 parts by weight to 25 parts by weight, and the polyolefin elastomer may be included in the content range of 10 parts by weight to 25 parts by weight.

If the content of the copolymer in the core layer is less than 40 parts by weight, the transparency is degraded when the film is stretched, and if greater than 90 parts by weight, the shrinkability of the film is degraded. In addition, if the content of the petroleum resin is greater than 30 parts by weight, the shrinkability of the film is degraded. In addition, if the content of the polyolefin elastomer is less than 10 parts by weight, the shrinkability and elongation of the film are degraded, and if greater than 30 parts by weight, the stiffness, transparency, and tensile strength of the film are degraded.

Meanwhile, in the present invention, flow nonuniformity may occur due to a difference in viscosity between the first polystyrene-based resin and polyolefin, and in order to solve the problem, the skin layer, the core layer, and the seal layer may each be formed of a melt-blended composition, and each composition may be combined to manufacture the film. As a result, it is possible to improve dispersibility through melt-kneading before stretching the film due to the difference in the flowability of raw materials of each layer and to ensure a smooth stretching process after forming the film.

Here, in the present invention, a tie layer may be provided between the skin layer and the core layer, and between the core layer and the seal layer to prevent degradation of interlayer adhesion due to the use of the first polystyrene-based resin in the skin layer and the seal layer, and at the same time, to further improve stiffness and tensile properties of the film.

As a component constituting the tie layer, a polystyrene-based resin may be used in terms of considering compatibility with components constituting the skin layer/seal layer and the core layer, and maintaining improved transparency and low-temperature shrinkability, and for example, as the polystyrene-based resin, styrene-ethylene-butylene-styrene copolymer (SEBS), styrene-ethylene-propylene-styrene copolymer (SEPS), styrene-butadiene-styrene copolymer (SBS), styrene-isoprene-styrene copolymer (SIS), styrene-butadiene copolymer (SBC), and the like may be used, and preferably, styrene-ethylene-butylene-styrene copolymer (SEBS) may be used.

As long as the resin composition of each layer constituting the film for a shrinkable label according to the present invention does not impair the purpose of the present invention, one or more of various additives such as an antioxidant, a catalyst neutralizer, a pigment, a dispersant, an anti-weathering agent, an anti-static agent, a UV stabilizer, talc, and the like may be additionally contained. The usage amount of the additives may be adjusted in consideration of a total manufacturing amount, a manufacturing process, and the like within a range known to be used in manufacturing the film for a shrinkable label according to the present invention without affecting the properties of the film.

In the present invention, the manufacturing of a film by using the above components may be in accordance with a method commonly known in the art. For example, the components constituting each layer may be introduced into a mixer and mixed in respective required amounts, prepared in a pellet phase at 180 °C to 240 °C using an extruder, and melt-molded into a film through a multi-layer film molding machine to prepare a film for a shrinkable label.

In this case, using the multi-layer film molding machine, molding into the form of a sheet having a thickness of 175 µm to 200 µm is performed, wherein the thickness ratio of a skin layer, a core layer, and a seal layer is, for example, 1 : 5 to 10 : 0.5 to 1.5, and then the sheet is stretched at a stretching ratio of 3.5 times to 5 times under the conditions of 80 °C to 85 °C in a stretching section, 95 °C to 100 °C in a pre-heating section, and 75 °C to 80 °C in a heat fixing section to manufacture a film having a final thickness of about 50 µm.

The film for a shrinkable label according to the present invention described above may provide a film for a shrinkable label having improved stiffness and low-temperature shrinkability while maintaining improved seaming properties and transparency as a non-adhesive label having a specific gravity of less than 1, and specifically, the film for a shrinkable label according to the present invention may have a density of less than 1 g/cm³, a shrinkage rate of 50% or greater, preferably 60% or greater, a stiffness of 6 gf/50 µm or greater, preferably 6.5 gf/50 µm or greater, and a haze (ASTM D1003, thickness of 50 µm) of less than 5%, preferably 3% or less, as measured according to the following methods.

### [Method for measuring shrinkage rate]

A film stretched in a transverse direction (TD) is cut to a size of 50 mm × 50 mm and immersed in a hot water bath at 100 °C for 10 seconds each, followed by measuring the dimensions thereof to calculate a shrinkage rate in the transverse direction (TD) according to Equation 1 below, which is represented as an average shrinkage rate. Shrinkage rate (%) = (Dimensions before shrinkage - Dimensions after shrinkage) / Dimensions before shrinkage x 100

### [Method for measuring stiffness]

Using a loop stiffness tester (Toyoseiki Co., Ltd.), a stretched film is cut to a size of 25 mm × 150 mm and fixed to left and right clamps (film fixing device) of the tester by setting a gap between the left and right clamps to 50 mm, and then portions of the film protruding to the outside of both clamps are cut, and the film is bent until there is no gap between the clamps so as to form a loop-shaped specimen, and an ending portion of the specimen is pushed at a rate of 60 mm/min using a loading device to measure a load (gf) applied at the time of the pushing.

Hereinafter, the present invention will be described in more detail using specific Examples and Comparative Examples. Specifications of the components used in Examples and Comparative Examples are summarized and shown in Table 1 below, and methods for measuring physical properties are as follows.

### [Measurement method]

- Density : Measured in accordance with the ASTM D 1505 density gradient column method.
- Melt Index: Measured in accordance with the ASTM D1238 under the temperature and load conditions described in Table 1 below.
- Melting point (Tm) : Measured in accordance with the ASTM D3418 standards. Using a differential scanning calorimeter (DSC, TA Instruments), 10 mg of a test piece was pre-melted at 220 °C for 5 minutes under a nitrogen gas atmosphere, and then the temperature was dropped to 40 °C at a temperature decrease rate of 10 °C/min. Thereafter, the temperature was raised at a temperature increase rate of 10 °C/min, and the peak temperature of the maximum peak of the obtained melting endothermic curve was defined as the melting point (Tm).
- Glass transition temperature (Tg) : Measured in accordance with the ASTM D3418 standards. Using a differential scanning calorimeter (DSC, TA Instruments), 10 mg of a test piece was pre-melted at 220 °C for 5 minutes under a nitrogen gas atmosphere, and then the temperature was dropped to -80 °C at a temperature decrease rate of 10 °C/min. Thereafter, while raising the temperature at a temperature increase rate of 10 °C/min, a median value of the height between the start point and the end point of the glass transition was calculated and defined as the glass transition temperature (Tg).
- Softening point (VICAT) : Measured in accordance with the ASTM D1525 standards (in the case of a petroleum resin, the ASTM E28 standards). As a penetrating test, a load of 1 kg or 5 kg was applied to a specimen having a thickness of 3 mm, and while raising the temperature uniformly at a rate of 50 °C/hr, a temperature at which a standard needle with a surface area of 1 mm² penetrated the specimen by 1 mm was defined as the softening point.

**[Table 1]**

| Classi ficati on | Componen ts | Grade | Density (g/cm³) | MI (g/10 min) | | | Heat analysis result | | |
|---|---|---|---|---|---|---|---|---|---|
| | | | | 190 °C/ 2.16 kg | 200 °C/ 5 kg | 230 °C/ 2.16 kg | Tm (°C) | Tg (°C) | Softeni ng point (°C) |
| Skin layer / Seal layer | COC | 9506F-500 | 1.010 | 0.9 | - | 5.5 | - | 65 | - |
| | SBC | KR52 | 1.010 | - | 9.0 | - | - | - | - |
| | HIPS | 576H | 1.050 | - | 5.5 | - | - | - | 90 |
| | GPPS | MD-100-301 | 1.040 | - | 8.5 | - | - | - | 88 |
| Tie layer | SEBS | G1645 | 0.900 | - | - | 3.5 | - | - | - |
| Core layer | T-PP | SB-740D | 0.900 | - | - | 5.5 | 129 | - | 114 |
| | H-PP | FO-130X | 0.900 | - | - | 3.0 | 161 | - | 149 |
| | HCR | SU525 | 1.080 | - | - | - | - | - | 125 |
| | PER | 6102FL | 0.862 | 1.4 | - | 3.0 | - | - | 53 |
| | PBR | XM7070 | 0.884 | 3.0 | - | 7.0 | - | - | 67 |
| * Notes | | | | | | | | | |
| - COC : Cyclic Olefin Resin | | | | | | | | | |
| - SBC : Styrene-Butadiene Copolymer (K-RESIN) | | | | | | | | | |
| - HIPS : High Impact Polystyrene | | | | | | | | | |
| - GPPS : General Purpose Polystyrene | | | | | | | | | |
| - SEBS : Styrene-Ethylene-Butadiene-Styrene Copolymer (Polystyrene content 12 wt%) | | | | | | | | | |
| - T-PP : Propylene Terpolymer (containing 3.2 wt% of ethylene, and 4.5 wt% of 1-butene) | | | | | | | | | |
| - H-PP : Propylene Homopolymer | | | | | | | | | |
| - HCR : Hydrogenated DCPD Resin | | | | | | | | | |
| - PER : Propylene-Ethylene Rubber (containing 16 wt% of ethylene) | | | | | | | | | |
| - PBR : Propylene-Butene Rubber (containing 26 wt% of 1-butene) | | | | | | | | | |

### Examples and Comparative Examples

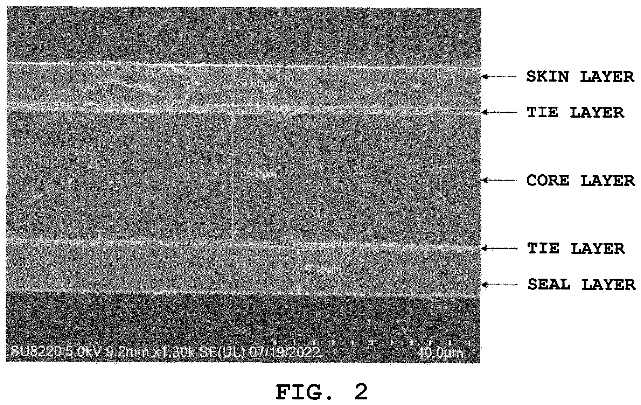

A melt blend (using a twin screw extruder) was prepared for each layer with compositions shown in Table 2 below, and then using a multi-layer film molding machine, the blend for each layer was molded into the form of a sheet having a thickness of 175 µm to 200 µm, wherein the thickness ratio of the skin layer/seal layer (the sum of thicknesses of the same level), the tie layer, and the core layer was configured in the ratio described in Table 2, and then the sheet was stretched at a stretching ratio of 3.8 times to 4.8 times under the conditions of 80 °C to 85 °C in a stretching section, 98 °C in a pre-heating section, and 78 °C in a heat fixing section to manufacture a film having a final thickness of 50 µm. A scanning electron microscope (SEM) cross-sectional imaging was performed on the film manufactured according to Example 1, and the result is shown in FIG. 2.

### Test Example

Physical properties of the above manufactured film were measured by the following methods, and the results are shown in Table 2 below.

### [Method for measuring physical properties]

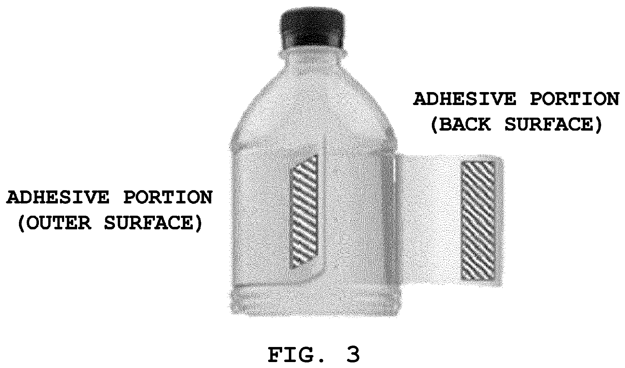

- Shrinkage rate : A film stretched in a transverse direction (TD) was cut to a size of 50 mm × 50 mm and immersed in a hot water bath at 100 °C for 10 seconds each, followed by measuring the dimensions thereof to calculate a shrinkage rate in the transverse direction (TD) according to Equation 1 below, which was represented as an average shrinkage rate. Shrinkage rate (%) = (Dimensions before shrinkage - Dimensions after shrinkage) / Dimensions before shrinkage x 100
- Seaming : A solvent (toluene, chloroform, limonene, or alphapinene) was applied to a cotton swab to confirm the presence or absence of adhesion between an outer surface and a rear surface of the stretched film (see FIG. 3).
- Haze : Measured in accordance with the ASTM D1003 standards.
- Loop-stiffness : Using a loop stiffness tester (Toyoseiki Co., Ltd.), a stretched film was cut to a size of 25 mm × 150 mm and fixed to left and right clamps (film fixing device) of the tester by setting a gap between the left and right clamps to 50 mm, and then portions of the film protruding to the outside of both clamps were cut, and the film was bent until there was no gap between the clamps so as to form a loop-shaped specimen, and an ending portion of the specimen was pushed at a rate of 60 mm/min using a loading device to measure a load (gf) applied at the time of the pushing.
- Interlayer peelability : If peeling occurs between the skin layer and core layer of the final stretched film, it was marked as 'X,' and if no peeling occurs, it was marked as 'O. '

**[Table 2]**

| Class ifica tion | Componen ts | Compa rativ e Examp le 1 | Comp arat ive Exam ple 2 | Exam ple 1 | Exam ple 2 | Exam ple 3 | Exam ple 4 | Exam ple 5 | Exam ple 6 | Comp arat ive Exam ple 3 | Comp arat ive Exam ple 4 | Comp arat ive Exam ple 5 |
|---|---|---|---|---|---|---|---|---|---|---|---|---|
| Skin | COC | 100 | - | - | - | - | - | - | - | - | - | - |
| / Seal layer (Part s by weigh t ) | SBC | - | 100 | 100 | 100 | 100 | 100 | 77 | 77 | 100 | 100 | 100 |
| | HIPS | - | - | - | - | - | - | 3 | 3 | - | - | - |
| | GPPS | - | - | - | - | - | - | 20 | 20 | - | - | - |
| Tie layer (Part s by weigh t ) | SEBS | - | - | 100 | 100 | 100 | 100 | 100 | 100 | 100 | 100 | 100 |
| Core layer (Part s by weigh t ) | T-PP | 70 | 70 | 70 | 70 | 75 | 75 | 78 | 75 | - | 59 | 59 |
| | H-PP | - | - | - | - | - | - | - | - | 70 | - | - |
| | HCR | 15 | 15 | 15 | 15 | 10 | 15 | 7 | 10 | 15 | 10 | 31 |
| | PER | - | - | 15 | - | 15 | - | 15 | 15 | 15 | 31 | 10 |
| | PBR | 15 | 15 | - | 15 | - | 10 | - | - | - | - | - |
| Film thick ness ratio | Skin/sea 1 layer | 3 | 3 | 3.8 | 3.8 | 3.8 | 3.8 | 3.8 | 3.8 | 3.8 | 3.8 | 3.8 |
| | Tie layer | - | - | 0.6 | 0.6 | 0.6 | 0.6 | 0.6 | 0.6 | 0.6 | 0.6 | 0.6 |
| | Core layer | 7 | 7 | 5.6 | 5.6 | 5.6 | 5.6 | 5.6 | 5.6 | 5.6 | 5.6 | 5.6 |
| Film Physi cal prope rties | Density (g/cm³) | 0.932 | 0.93 5 | 0.95 7 | 0.96 2 | 0.94 8 | 0.96 6 | 0.96 2 | 0.96 2 | Not meas urab le | 0.91 2 | 0. 97 8 |
| | Haze ( ) | 4.8 | - | 2 | 2.1 | 2 | 2 | 2.3 | 2.2 | | 2.0 | 6.5 |
| | Loof Stiffnes s (gf/50 *µ*m) | 5.8 | - | 6.7 | 6.8 | 6.1 | 6.8 | 6.6 | 6.7 | | 3.1 | 6.7 |
| | Seaming | O | - | ○ | O | O | O | 0 | 0 | | 0 | 0 |
| | Shrinkag e rate (%) | 55 | - | 60 | 68 | 58 | 62 | 60 | 60 | | 70 | 60 |
| | Interlay er peelabil ity | O | X | O | O | O | O | 0 | 0 | | 0 | 0 |

Referring to Table 2, it can be seen that if, according to the present invention, the first polystyrene-based resin is used for the skin layer and the seal layer, and the core layer is composed of a copolymer of propylene and two or more types of olefins selected from ethylene, and α-olefin, a petroleum resin, and a polyolefin elastomer, low-temperature shrinkability and stiffness are improved while maintaining improved seaming properties and transparency, and if PBR is used as the polyolefin elastomer in the core layer (Examples 2 and 4), or if two or more first polystyrene-based resins are mixed and used for the skin layer and the seal layer (Examples 5 and 6), the above-described effects are significantly improved.

On the other hand, it can be see that if a typical cyclic olefin is applied to the skin layer and the seal layer (Comparative Example 1), good seaming properties and interlayer peelability are exhibited without using a tie layer, but the transparency, stiffness, and low-temperature shrinkability are overall not as good as those of Example 1, and even if the first polystyrene-based resin is used for the skin layer and the seal layer, interlayer peeling occurs if a tie layer is not used (Comparative Example 2).

In addition, it has been found that if a propylene homopolymer is used for the core layer (Comparative Example 3), it is difficult to form a film since stretching is not achieved due to an insufficient stretching temperature, and it can be seen that if the content of the elastomer in the core layer is excessive (Comparative Example 4), the transparency is improved due to a low density, but the stiffness is degraded, which is not suitable for the labeling process of a film, and if the content of the petroleum resin in the core layer is excessive (Comparative Example 5), the transparency is degraded due to an increase in density and the migration of small molecules, and an effect of improving shrinkability and stiffness is no longer exhibited compared to the increase in the content.

The preferred embodiments of the present invention have been described in detail. The description of the present invention has been presented for purposes of illustration, and it will be understood by those skilled in the art that various changes in form and details may be made therein without departing from the spirit and scope of the invention.

Therefore, the scope of the present invention is represented by the following claims rather than the above detailed description, and all changes and changed forms derived from the meaning, scope, and equivalent concepts of the claims should be construed as being included in the scope of the present invention.

## Claims

1. A film for a shrinkable label, the film comprising a skin layer, a core layer, and a seal layer, wherein:
the skin layer and the seal layer include a first polystyrene-based resin; and
the core layer includes: 40 parts by weight to 90 parts by weight of a copolymer of propylene and two or more types of olefins selected from ethylene and α-olefin; 5 parts by weight to 30 parts by weight of a petroleum resin having a softening point of 120 °C to 140 °C; and 5 parts by weight to 30 parts by weight of a polyolefin elastomer,
wherein a tie layer including a second polystyrene-based resin is provided between the skin layer and the core layer, and between the core layer and the seal layer.

2. The film of claim 1, wherein the first polystyrene-based resin is one or more selected from the group consisting of general purpose polystyrene (GPPS), high-impact polystyrene (HIPS), styrene-butadiene-styrene copolymer (SBS), styrene-isoprene-styrene copolymer (SIS), styrene-ethylene-butylene-styrene copolymer (SEBS), and styrene-butadiene copolymer (SBC).

3. The film of claim 1, wherein the copolymer has a melting point (Tm) of 123 °C to 138 °C and a melt index (230 °C, 2.16 kg load) of 2 g/10 min to 10 g/10 min, and the two types of olefins are ethylene and 1-butene.

4. The film of claim 1, wherein the ethylene and the 1-butene are each contained in 1 wt% to 5 wt% in the copolymer.

5. The film of claim 1, wherein the polyolefin elastomer is propylene-ethylene rubber (PER) or propylene-butene rubber (PBR) having a density of 0.85 g/cm³ to 0.9 g/cm³ and a melt index (230 °C, 2.16 kg load) of 0.5 g/10 min to 10 g/10 min.

6. The film of claim 1, wherein the second polystyrene-based resin is one or more selected from the group consisting of styrene-ethylene-butylene-styrene copolymer (SEBS), styrene-ethylene-propylene-styrene copolymer (SEPS), styrene-butadiene-styrene copolymer (SBS), styrene-isoprene-styrene copolymer (SIS), and styrene-butadiene copolymer (SBC).

7. The film of claim 1, wherein the film has a density of less than 1 g/cm³, a shrinkage rate of 50% or greater, and a loop stiffness of 6 gf/50 µm or greater, as measured according to the following methods:
[Method for measuring shrinkage rate]
wherein a film stretched in a transverse direction (TD) is cut to a size of 50 mm × 50 mm and immersed in a hot water bath at 100 °C for 10 seconds each, followed by measuring the dimensions thereof to calculate a shrinkage rate in the transverse direction (TD) according to Equation 1 below, which is represented as an average shrinkage rate; Shrinkage rate (%) = (Dimensions before shrinkage - Dimensions after shrinkage) / Dimensions before shrinkage x 100
[Method for measuring stiffness]
wherein, using a loop stiffness tester (Toyoseiki Co., Ltd.), a stretched film is cut to a size of 25 mm × 150 mm and fixed to left and right clamps (film fixing device) of the tester by setting a gap between the left and right clamps to 50 mm, and then portions of the film protruding to the outside of both clamps are cut, and the film is bent until there is no gap between the clamps so as to form a loop-shaped specimen, and an ending portion of the specimen is pushed at a rate of 60 mm/min using a loading device to measure a load (gf) applied at the time of the pushing.

8. The film of claim 7, wherein the film has a haze (ASTM D1003, thickness of 50 µm) of less than 5%.
